# EUROPÄISCHE PATENTSCHRIFT

(11) **EP 1 618 072 B1**
(45) Veröffentlichungstag und Bekanntmachung des Hinweises auf die Patenterteilung: **01.04.2009**
(21) Anmeldenummer: 04725879.3
(22) Anmeldetag: 06.04.2004
(51) Int. Cl.: C02F 3/06, C02F 1/64, C02F 3/10

(54) **VERFAHREN UND VORRICHTUNG ZUR BEHANDLUNG FLIESSFÄHIGER MEDIEN MIT EINEM FILTERREAKTOR**
METHOD AND DEVICE FOR THE TREATMENT OF FLOWABLE MEDIA BY MEANS OF A FILTER REACTOR
PROCEDE ET DISPOSITIF DE TRAITEMENT DE MILIEUX FLUIDES AU MOYEN D'UN REACTEUR A FILTRE

(30) Priorität: 07.04.2003 DE 10316729; 29.10.2003 DE 10351821
(43) Veröffentlichungstag der Anmeldung: 25.01.2006
(73) Patentinhaber: Würdig, Uwe, Dipl.-Ing., 13086 Berlin (DE)
(72) Erfinder: Würdig, Uwe, Dipl.-Ing., 13086 Berlin (DE)
(74) Vertreter: Schubert, Klemens
(86) Internationale Anmeldenummer: PCT/DE2004/000746
(87) Internationale Veröffentlichungsnummer: WO 2004/092077

(56) Entgegenhaltungen:
- DE-A- 3 800 613
- FR-A- 2 026 341
- US-A- 5 019 268
- US-A- 5 578 200

## Beschreibung

Die Erfindung betrifft eine Vorrichtung zur Behandlung fließfähiger Medien, vorzugsweise zur Wasseraufbereitung, mittels welcher insbesondere Verunreinigungen aus dem jeweiligen Medium entfernt werden.

Fließfähige Medien, wie Wasser, Öl oder Hydrauliköl, müssen vielfach vor Ihrer Verwendung für den jeweiligen Einsatzzweck oder im Zusammenhang mit einer Wiederaufbereitung von Verunreinigungen befreit werden. Dabei sind physikalische, also teilchen- bzw. partikelförmige Verunreinigungen und/oder chemische Verunreinigungen aus dem jeweiligen Medium zu entfernen. Von besonderer Bedeutung ist dies für die Trink- und Brauchwasseraufbereitung.
Das Ausfiltern teilchenförmiger Verunreinigungen erfolgt insbesondere im Zusammenhang mit dem letztgenannten Einsatzzweck, zumeist in einer ein- oder mehrstufigen Filteranordnung, bei der ein senkrecht stehender Filterreaktor mit einem darin eingeordneten Filter von dem zu reinigenden Medium durchströmt wird. In bekannten Anordnungen dieser Art durchströmt das jeweilige Medium den Filterreaktor im Filterbetrieb von oben nach unten. Die enthaltenen Verunreinigungen werden durch einen im unteren Bereich des Filterreaktors eingeordneten Filter zurückgehalten. Ein Problem besteht jedoch darin, dass sich der Filter im Laufe der Zeit zusetzt und hierdurch der geforderte Durchsatz durch die Anlage und die Filterwirkung zunehmend beeinträchtigt werden. Um dem zu begegnen, ist es üblich, den oder die Filter zyklisch oder azyklisch zu spülen. Im Algemeinen geschieht dies durch Umschalten der Strömungsrichtung des den jeweiligen Filterreaktor durchströmenden Mediums, wobei dieses sich im Rückspülbetrieb von unten nach oben durch den Filterreaktor bewegt. Durch das Rückspülen werden Verunreinigungen, die sich im Filter abgesetzt haben, von dem zu behandelnden, jedoch hier als Spülmittel wirkenden Medium aus dem Filter gelöst und nach oben aus dem Filterreaktor ausgetragen, wobei das mit den Verunreinigungen belastete Medium durch entsprechendes Umschalten der Leitungswege aus dem Verbraucher- bzw. Reinigungskreis entfernt wird.

Die dargestellte Verfahrensweise ist jedoch mit Nachteilen behaftet. Insbesondere ist ein hoher Druck erforderlich, um die im Allgemeinen oben auf dem Filter aufliegenden Verunreinigungen mittels des Spülmediums nach dem Herauslösen aus dem Filter nach oben aus dem Reaktor auszutragen. Dabei wirkt der im unteren Bereich des Filterreaktors angeordnete Filter, unabhängig davon ob es sich dabei um ein Sieb oder um granuliertes Filtermaterial wie Sand handelt, druckreduzierend und damit quasi bremsend auf das ihn durchströmende Spülmedium.
Durch die US 5,019,268 werden ein Verfahren und eine Vorrichtung beschrieben, welche die genannten Nachteile vermeiden. Entsprechend der beschriebenen Lösung wird das zu behandelnde Medium, gemäß der Schrift Abwasser, im Filterbetrieb von unten nach oben durch einen senkrecht stehenden Filterreaktor geleitet. Die Filterung erfolgt mittels eines mehrschichtigen Filters aus granulierten Materialien, welche eine gegenüber dem zu behandelnden Wasser geringere Dichte aufweisen. Selbstverständlich muss auch hier das Filtermaterial in zeitlichen Abständen gereinigt werden. Dies geschieht in einem den Filterbetrieb unterbrechenden Rückspülbetrieb, bei dem der Filterreaktor im Gegenstrom betrieben wird. Es hat sich jedoch gezeigt, dass die Auftriebskörper des Filtermaterials dem durch das Medium beim Rückspülen ausgeübten Druck ausweichen und somit eine wirkungsvolle Abreinigung der Filterpartikel nicht erreicht wird. Dabei ist festzustellen, dass die dem Druck des Rückspülmediums ausweichenden, mit Verunreinigungen behafteten Filterpartikel dazu neigen, im oberen Bereich des Filterreaktors zu verbacken und einen Pfropfen auszubilden, so dass ein großer Teil der Filterpartikel kaum oder gar nicht abgereinigt wird. Diesem Nachteil kann bei einer Senkrechtstellung des Filterreaktors nur dadurch begegnet werden, dass zusätzliche Hilfsenergien eingesetzt werden. Denkbar ist beispielsweise der Einsatz spezieller Strömungsdüsen für das zur Reinigung verwendete flüssige Medium oder von Rührern, für welche jedoch in jedem Falle ein zusätzlicher Aufwand an Hilfsenergie erforderlich ist.
Hinsichtlich der Strömungsrichtungen im Filterbetrieb und im Rückspülbetrieb mit der zuvor beschriebenen Lösung vergleichbare und daher mit dem gleichen Nachteil behaftete Lösungen werden durch die US 5,578,200, die DE 38 00 613 C2 und die FR 2.026.341 offenbart. Zur Verbesserung des Reinigungseffektes beim Rückspülen lehrt dabei die US 5,578,200 den Einsatz spezieller Luftdruckdüsen, mittels welcher in dem Filterreaktor eine zirkulare Strömung erzeugt wird, um die Feststoffkomponenten von dem Filtermedium zu trennen.

Aufgabe der Erfindung ist es, die Nachteile aus dem Stand der Technik bekannter Lösungen zu vermeiden. Insbesondere soll eine Lösung bereitgestellt werden, die einerseits einen effizienten Filterbetrieb und andererseits ein wirkungsvolles und einfaches Ausspülen des Filters durch Umschalten in einen Rückspülbetrieb ermöglicht.

Die Aufgabe wird durch eine Vorrichtung mit den Merkmalen des Hauptanspruchs gelöst. Vorteilhafte Aus- und Weiterbildungen der Erfindung sind durch die jeweiligen Unteransprüche gegeben.
Die erfindungsgemäße Vorrichtung für die Behandlung fließfähiger Medien, welche aus einem Drucknetz oder mittels einer Pumpe zugeführt werden, besteht, in an sich bekannter Weise, mindestens aus einer Steuereinheit, Verbindungsleitungen mit darin eingeordneten steuerbaren Ventilen bzw. Schalteinheiten und wenigstens einer von der Steuereinheit gesteuerten Filterstufe. Hierbei sollen in den weiteren Ausführungen die Begriffe "schaltbares Ventil", "Schaltventil" und "Schalteinheit" synonym gebraucht werden. Ein- und Auslass für das Medium sind am Filterreaktor, ebenso wie bei bekannten senkrechten Anordnungen in verschiedenen horizontalen Ebenen angeordnet. Die wenigstens eine Filterstufe wird von einem Filterreaktor mit einem darin eingeordneten Filter gebildet. In erfindungswesentlicher Weise ist der wenigstens eine Filterreaktor jedoch nicht senkrecht, sondern geneigt angeordnet. Der Filter wird durch ein granulatförmiges Filtermaterial realisiert, welches eine geringere Dichte aufweist als das zu behandelnde Medium. Die Filterwirkung entsteht dadurch, dass sich dieses Filtermaterial im Filterbetrieb als eine Filterschichtung im oberen Bereich des Filterreaktors anlagert. Die Schaltventile bzw. Schalteinheiten in den Leitungen werden von der Steuereinheit so angesteuert, dass das Medium den Filterreaktor im Filterbetrieb, druckbeaufschlagt, von unten nach oben durchströmt. Zyklisch oder azyklisch wird die Filterstufe von der Steuereinrichtung mittels mindestens eines entsprechenden Schaltventils vom Filterbetrieb in den Rückspülbetrieb umgeschaltet. Das zu behandelnde Medium durchströmt den Filterreaktor beim Rückspülen ebenfalls druckbeaufschlagt von oben nach unten. Dabei wird das im Filterreaktor enthaltene Filtergranulat derart verwirbelt, dass daran anhaftende partikelförmige Verunreinigungen vom Filtermaterial gelöst sowie mit dem Medium und, mittels eines entsprechenden Ventils, mengenreguliert nach unten aus dem Filterreaktor ausgetragen werden. Die Vorrichtung dient der Entfernung partikelförmiger Verunreinigungen aus fließfähigen Medien. Sie dient vorzugsweise der Behandlung von Wasser zur Aufbereitung als Brauchwasser, ist jedoch hierauf nicht beschränkt. Vielmehr ist insbesondere das bereits dargestellte grundsätzliche Filter-/(Rück-)Spülregime auch für andere Medien, beispielsweise zur Filterung von Öl, anwendbar. Insoweit soll durch die anhand der Behandlung von Wasser erfolgende Darstellung von Verfahrensaspekten der Gegenstand der Erfindung nicht beschränkt werden.
Vorteilhafterweise wird als Spülmedium das zu behandelnde fließfähige Medium selbst verwendet. Jedoch ist dies davon abhängig, dass sich das Medium hierfür eignet. Weiterhin bevorzugt, erfolgt dabei das Umschalten zwischen Rückspülbetrieb und Filterbetrieb unter Zwischenschaltung eines Nachspülgangs, bei dem das zu behandelnde Medium den Filterreaktor ebenso wie im Filterbetrieb von unten nach oben durchströmt. Jedoch wird das nach oben aus dem Filterreaktor austretende Medium zunächst nicht der weiteren Verwendung zugeleitet, sondern, wie im Rückspülbetrieb als Abwasser über einen Abfluss abgeleitet oder zur erneuten Filterung in den Filterkreislauf zurückgeführt. Hierdurch wird unter anderem vermieden, dass eventuell beim Rückspülen nicht aus dem Filterreaktor ausgetragene Verunreinigungen in den Verbrauch gelangen.
Entsprechend einer möglichen Ausgestaltung weist die Vorrichtung mehrere parallel betriebene Filterstufen mit jeweils einem Filterreaktor auf. Die Filterreaktoren sind dabei mit gleicher Neigung zueinander parallel angeordnet.

Vorzugsweise ist der Filterreaktor bzw. sind die Filterreaktoren in einem Winkel von 15° bis 85° gegen die Horizontale geneigt angeordnet.
Besonders bevorzugt ist eine Ausführungsform mit einem Neigungswinkel (des Filterreaktors bzw. der Filterreaktoren) zwischen 60° und 80° gegen die Horizontale.
Gemäß einer praxisgerechten Ausbildung der Erfindung ist in wenigstens einem Filterreaktor vorgeschäumtes sowie granuliertes Polystyrol als Filtermaterial vorgesehen. Bevorzugt weist das Filtermaterial eine Dichte zwischen 15 und 100 g/l auf. Ebenfalls bevorzugt ist das Filtermaterial annähernd kugelförmig ausgebildet und weist eine Flockengröße mit einem Durchmesser zwischen 2 und 8 mm auf.
Bei einer auch für die chemische Behandlung bzw. Reinigung des fließfähigen Mediums ausgebildeten Vorrichtung sind zudem an dem Filtermaterial Mikroorganismen angesiedelt. Diese verstoffwechseln chemische Verunreinigungen, wie gelöste Eisen- und/oder Manganionen, durch biogene Oxidation in schwerlösliche, am Filter eines Filterreaktors abscheidbare Verbindungen. Vorzugsweise ist der oder den Filterstufen dabei eine Dosiereinrichtung für einen druck- und mengengeregelten Eintrag von Sauerstoff in das zu behandelnde Medium vorgeordnet. Diese kann gemäß einer möglichen Ausgestaltung mit den von der Steuereinheit zur Umschaltung zwischen dem Filter- und dem Rückspülbetrieb betätigten Einheiten, wie Schaltventilen zu einer integralen bzw. modularen Einheit zusammengefasst sein.
Die Umschaltung der Filterstufe oder Filterstufen zwischen dem Filter- und dem Rückspülbetrieb erfolgt vorzugsweise automatisch durch eine Mikroprozessorsteuerung, welche mit einem Display und Speichermitteln zur Hinterlegung und Änderung von Daten zur Festlegung eines Filter-/(Rück-)Spül-Regimes verbunden ist.

Die Erfindung soll nachfolgend anhand von Ausführungsbeispielen nochmals näher erläutert werden. In den zugehörigen Zeichnungen zeigen:
- Fig. 1:: Die erfindungsgemäße Vorrichtung mit einer Filterstufe
- Fig. 2:: Eine Ausführung der Vorrichtung mit zwei parallelen Filterstufen
- Fig. 3:: Eine modifizierte Ausführung der Vorrichtung nach Fig. 2.

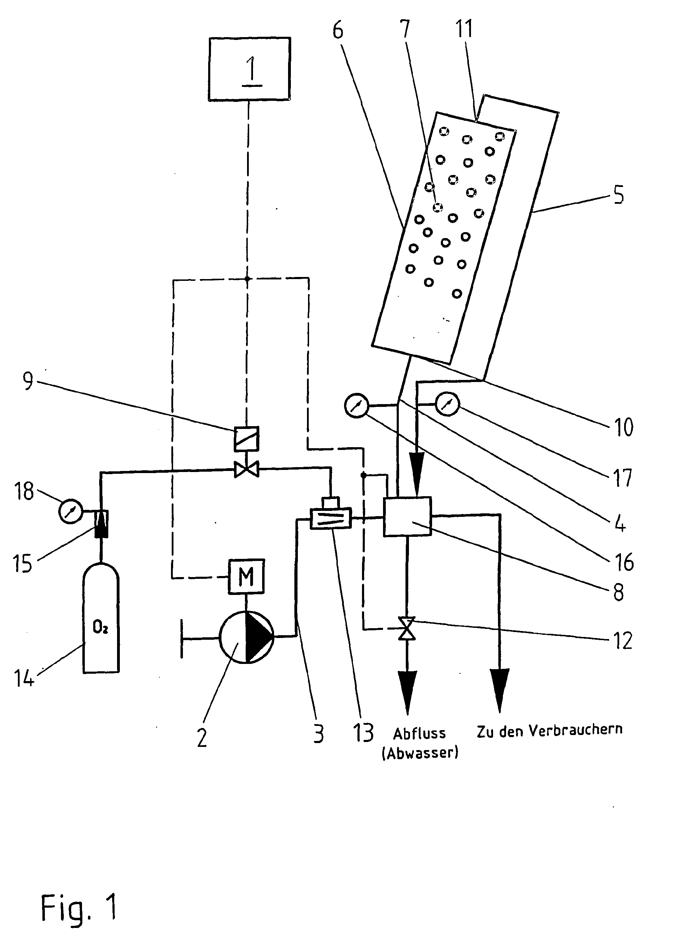

In der Fig. 1 ist eine Ausführungsform der erfindungsgemäßen Vorrichtung mit den wesentlichen Komponenten in einer vereinfachten schematischen Darstellung gezeigt. Es handelt sich dabei um eine Ausführungsform zur Brauchwasseraufbereitung mit einer Filterstufe 6, 7 und einer, der Filterstufe 6, 7 vorgeschalteten Sauerstoffdosiereinheit 13, so dass es die beispielhaft dargestellte Vorrichtung ermöglicht, das Wasser sowohl im Hinblick auf das Herausfiltern teilchenförmiger Verunreinigungen, als auch auf das Entfernen chemischer Verunreinigungen, aufzubereiten. Das zu behandelnde Medium wird der Vorrichtung aus einem Drucknetz oder, wie im dargestellten Beispiel, mittels einer motorgetriebenen Pumpe 2 zugeführt. Die Vorrichtung umfasst im Wesentlichen die von dem Filterreaktor 6 mit dem darin eingeordneten Filter 7 gebildete Filterstufe 6, 7, die ihr, entsprechend einer bevorzugten Ausgestaltung vorgeordnete Sauerstoffdosiereinheit 13, Verbindungsleitungen 3, 4, 5 mit darin eingeordneten Ventilen, die als Schaltventil bzw. Schalteinheit 8 und/oder regelbares Ventil 9 ausgebildet sind, ein Ventil 12 für einen mengenregulierten Abfluss des Spülmediums sowie eine die vorgenannten Einheiten, insbesondere die Schalteinheit 8, die Ventile 9 und 12 sowie die gegebenenfalls vorhandene Pumpe 2, steuernde Steuereinheit 1. Diese Komponenten der Vorrichtung werden in einer praxisgerechten Ausführung durch weitere, hier nur der Vollständigkeit halber genannte, teilweise in der Zeichnung - da üblich und nicht erfindungswesentlich - nicht dargestellte Komponenten ergänzt sein. So ist unter anderem zur Sauerstoffdosiereinheit 13 gehörig eine Sauerstoffquelle bzw. - flasche 14 mit einem Druckminderer 15 angeordnet. Zur Kontrolle der Betriebswerte sind an mehreren Stellen der Vorrichtung Druckmesser bzw. Manometer 16, 17, 18 angeordnet. Weiterhin wird die Steuereinheit 1 in der Praxis sicherlich durch Bedienelemente sowie gegebenenfalls durch ein, möglicherweise auch peripher angeordnetes, hier nicht dargestelltes, Display zum Einstellen bzw. Konfigurieren der Vorrichtung sowie zur visuellen Kontrolle und Überwachung von Betriebszuständen ergänzt sein. Durch die Pumpe 2 wird das aufzubereitende Wasser beispielsweise aus einem Brunnen gefördert und der Filterstufe 6, 7 zugeleitet. Auf dem Weg zur Filterstufe 6, 7, bestehend aus Filterreaktor 6 und Filter 7, passiert das Wasser die Sauerstoffdosiereinheit 13, mittels welcher es mit Sauerstoff angereichert wird.
In erfindungswesentlicher Weise weist der Filterreaktor 6, dessen Ein- und Auslauf 10, 11 sich, wie ersichtlich, in unterschiedlichen horizontalen Ebenen befinden, eine Schrägstellung auf. In dem gezeigten Beispiel ist der Filterreaktor 6 in einem Winkel von etwa 70° gegen die Horizontale geneigt. Im normalen Filterbetrieb wird das zu behandelnde fließfähige Medium, im Beispiel für die Verwendung als Brauchwasser aufzubereitendes Wasser, mittels der Pumpe 2 über die Leitungen 3, 4 von unten nach oben durch den Filterreaktor 6 gedrückt. Dabei passiert das Medium bzw. Wasser den im Filterreaktor 6 angeordneten Filter 7, an dem teilchenförmige Verunreinigungen abgeschieden werden. Der Filter 7 ist durch ein granulatförmiges Filtermaterial gebildet, welches eine geringere Dichte aufweist als das jeweils zu behandelnde Medium und sich dadurch im oberen Bereich des Filterreaktors 6 als Schichtung aufgebaut. Bei dem Filtermaterial 7 handelt es sich beispielsweise um ein Granulat mit annähernd kugelförmigen Granulatteilchen aus vorgeschäumten Polystyrol. Physikalische, respektive teilchenförmige Verunreinigungen, welche schwerer sind als das Filtermaterial 7, bleiben in der Filterschichtung hängen und werden so aus dem fließfähigen Medium abgetrennt. Gesteuert von der Steuereinheit 1 wird das Schaltventil bzw. die Schalteinheit 8 zyklisch oder azyklisch in eine Reinigungs- bzw. Rückspülstellung umgeschaltet. Dabei werden die Leitungen 3, 4, 5 und der Filterreaktor 6 so mit der Pumpe 2 verbunden, dass das Wasser nicht mehr von unten sondern von oben in den Filterreaktor 6 eintritt. Dies geschieht ebenso, wie im Filterbetrieb unter Druck. Durch das unter Druck von oben einströmende Wasser wird das den Filter 7 ausbildende Filtermaterial in dem Filterreaktor 6 verwirbelt. Das Filtermaterial wird durch den Medienstrom an der Oberseite des geneigten Filterreaktors nach unten befördert und strebt unter Ausbildung eines relativ geordneten Umlaufprozesses durch seine Auftriebskraft von der Unterseite wieder nach oben. Dabei werden die Granulatteile des Filters 7 auseinander gerissen, das heißt die einzelnen gegebenenfalls zusammengeklumpten Granulatteile voneinander getrennt. Beim Aufwärtsströmen des verwirbelten Filtermaterials 7 fallen außerdem die schweren teilchenförmigen Verunreinigungen aus dem Filtergranulat aus. Sie werden dann zusammen mit dem für das Rückspülen verwendeten Wasser nach unten aus dem Filterreaktor 6 ausgetragen. Selbstverständlich wird das insoweit als Spülmittel wirkende Wasser mit dem aus dem Filter 7 ausgespülten Verunreinigungen über einen gesonderten Abfluss aus dem Leitungssystem ausgeschleust. Nach einer festgelegten Rückspüldauer schaltet die Vorrichtung wieder in den Filterbetrieb. Vorteilhafterweise erfolgt dies jedoch unter Zwischenschaltung eines Nachspülschritts. Dabei durchströmt das Medium den Filterreaktor 6, ebenso wie im eigentlichen Filterbetrieb, von unten nach oben, nur dass der nach oben aus dem Filterreaktor 6 austretende Volumenstrom nicht als gereinigtes Wasser für den weiteren Verbrauch zur Verfügung gestellt, sondern über den Abfluss ausgetragen oder in den Filterkreislauf zurückgeführt wird.
In der beispielhaft dargestellten Vorrichtung wird das zu behandelnde Wasser, wie bereits erwähnt, einer kombinierten chemischen bzw. biologischen und physikalischen Behandlung unterzogen. Dazu sind an dem Granulat des Filters 7 Mikroorganismen angesiedelt, welche Verunreinigungen wie gelöste Eisen- oder Manganionen verstoffwechseln und dadurch in schwer lösliche Verbindungen überführen. Diese Verbindungen werden, ebenso wie die sonstigen teilchenförmigen Verunreinigungen, am Filter 7 abgeschieden und mit diesem im Zuge des Spülens aus der Vorrichtung ausgeschleust. Damit die an den Filterpartikeln anhaften Mikroorganismen ihre Aufgabe der biogenen Oxidation der genannten chemischen Verunreinigungen erfüllen können, ist es erforderlich, das Wasser mit Sauerstoff anzureichern. Dies geschieht mittels der der Filterstufe 6, 7 vorgeschalteten Sauerstoffdosiereinrichtung 13, welche aus einer Sauerstoffflasche 14 über das von der Steuereinrichtung 1 gesteuerte Magnetventil 9 versorgt wird. Durch die Sauerstoffdosiereinrichtung 13 wird der Sauerstoff mengen- und druckreguliert in das aufzubereitende Wasser eingetragen. Druck und Menge hängen mit dem Gesamtdurchsatz des Mediums durch die Vorrichtung zusammen und mit diesem letztlich von der Art des Mediums und der Größe der Vorrichtung ab. Optimale Werte sind somit einzelfallbezogen in Abhängigkeit vom jeweiligen Einsatzfall zu ermitteln. Dies stellt jedoch für den Fachmann kein Problem. Bevorzugt ist die Steuereinheit 1 als eine SPS ausgebildet bzw. mit einem Mikrocontroller ausgestattet. Über eine entsprechende an einem nicht dargestellten Display visualisierte Menüführung können dabei durch den Fachmann im Ergebnis von Messungen der Reinheit bzw. Qualität des behandelten Mediums Vorrichtungsparameter, wie Druck des Mediums beim Filtern und Rückspülen oder die Dauer von Filter-, Rückspül- und Nachspülbetrieb, eingestellt werden. Zur Kontrolle dienen dabei auch die Druckmesser 16, 17, 18 der Vorrichtung und gegebenenfalls vorhandene, hier nicht gezeigte Durchflussmesser oder dergleichen.
Für die Behandlung von Abwasser in Anlagen bzw. Vorrichtungen typischer Größe wurden bei Versuchen beispielsweise Filterlaufzeiten, also Zeiten ununterbrochenen Filterbetriebs mit einem ausreichenden Filterergebnis, von 1 bis 10 Tagen praktiziert. Selbstverständlich hängt dies stark vom Grad der Verschmutzung des zu behandelnden Wassers ab. Dem stehen jedoch dabei, vergleichsweise kurze Rückspülzeiten von 1 bis 3 Minuten gegenüber. In dieser kurzen Zeit wird auf einfache Weise, insbesondere ohne das Erfordernis eines Entfernens des Filters 7, eine wirkungsvolle Reinigung des Filters 7, respektive des Filtermaterials erreicht. Dies wird in vorteilhafter Weise zum einen durch die gezielte, über den Druck und die Abflussmenge des Spülmediums steuerbare Verwirbelung des Filtermaterials 7 und zum anderen dadurch ermöglicht, dass die bei der Verwirbelung aus dem Filtergranulat ausfallenden Verunreinigungen nicht gegen die Schwerkraft und die bremsende Wirkung eines Filters 7 nach oben aus dem Filterreaktor 6 ausgeschleust werden müssen, sondern sich selbstständig zur Unterseite des Filterreaktors 6 bewegen und über den für den Filterbetrieb als Einlass 10 wirkenden Anschluss sowie den separaten Abfluss ausgeschleust werden können. Sowohl das Filtern als auch das (Rück-)Spülen erfolgen, gesteuert durch die Steuereinheit 1 bzw. die SPS, zeit-, druck- oder durchflussmengengesteuert. Dabei wird die Vorrichtung im Rückspülbetrieb so gesteuert, dass zwar die Verunreinigungen möglichst vollständig aus dem Filtermaterial ausfallen, aber die am Filtermaterial ebenfalls anhaften Mikroorganismen für die biologische Reinigung allenfalls zur Regulierung der Population reduziert, jedoch nicht vollständig entfernt oder zerstört werden. Die Stoffwechselprodukte der Mikroorganismen werden dabei wie die zuvor im Filter 7 abgesetzten stofflichen bzw. partikelförmigen Verunreinigungen nach unten aus dem Filterreaktor ausgetragen. Nach dem Rückspülen des Filters 7 werden die Leitungswege, veranlasst durch die Steuerung 1 sowie mittels der Schalteinheit 8 so umgeschaltet, dass der Filterreaktor 6 wieder von unten nach oben vom Wasser durchströmt wird. Jedoch wird das den Filterreaktor 6 nach oben verlassende Wasser zunächst noch nicht dem Verbrauch zur Verfügung gestellt, sondern vielmehr, durch Umschaltung der Wege innerhalb der Schalteinheit 8, wie im Rückspülbetrieb als Abwasser über den Abfluss ausgetragen oder zum erneuten Filtern in den Filterkreislauf zurückgeführt. Hierdurch wird ein Nachspülbetrieb realisiert, der einerseits verhindert, dass gegebenenfalls noch im Filterreaktor 6 verbliebene Verunreinigungen zu den (nicht dargestellten). Verbrauchern gelangen, und andererseits dazu dient, die Filterschichtung wieder im oberen Bereich des Filterreaktors 6 für eine wirkungsvolle Filterung zu formieren. Hierbei sind, in Relation zu den vorgenannten Zeitangaben, Nachspülzeiten zwischen 3 und 5 Minuten als günstig anzusehen.

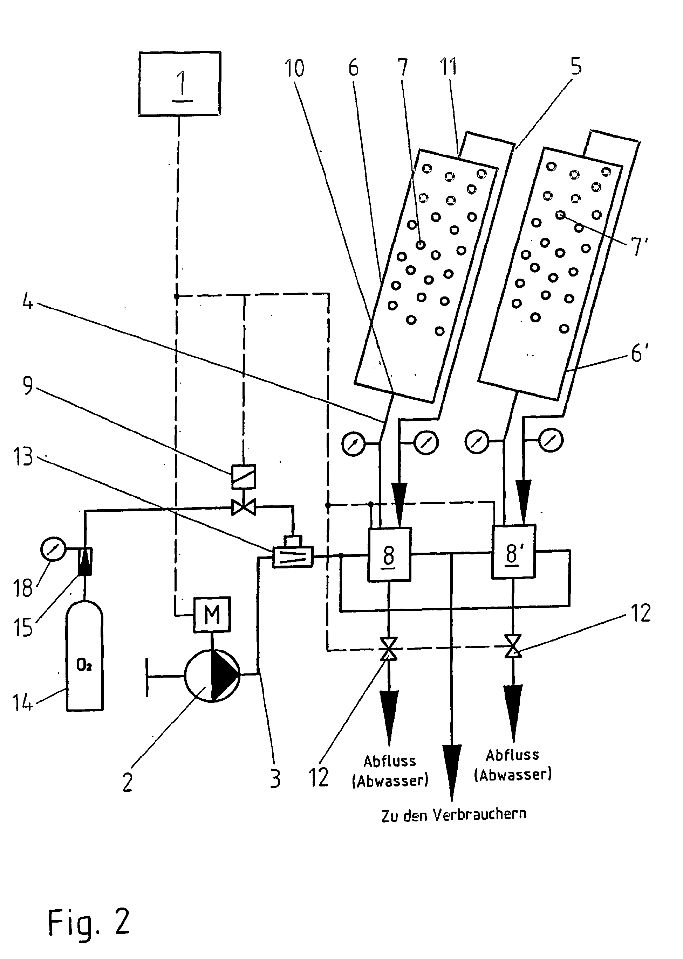

Die Fig. 2 zeigt eine grundsätzlich gleich wie die in der Fig. 1 aufgebaute Vorrichtung mit zwei parallelen Filterstufen 6, 7, 6', 7' und Schalteinheiten 8, 8'. Dabei sind beide Filterreaktoren 6, 6' mit den Filtern 7, 7' mit gleichem Neigungswinkel parallel zueinander angeordnet. Die Wirkungsweise entspricht der zur Fig. 1 erläuterten.

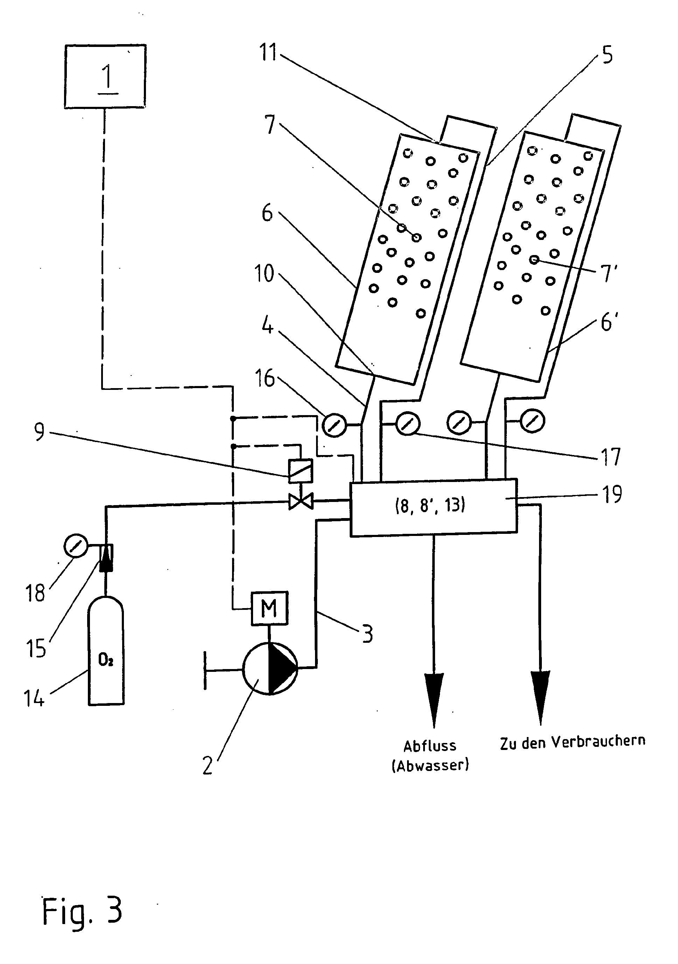

Die Fig. 3 zeigt nochmals eine geringe Abwandlung der Ausführungsform nach Fig. 2. Bei dieser Ausführungsform ist die Schalteinheit 8, 8' zum Umschalten zwischen Filter-, Rückspül- und Nachspülbetrieb mit der Sauerstoffdosiereinrichtung 13 zu einer gemeinsamen Einheit 19 zusammengefasst. Aber auch hier ist die Wirkungsweise die gleiche. Selbstverständlich ist ein Zusammenfassen von Sauerstoffdosiereinheit 13 und Schalteinheit 8 in einer gemeinsamen Einheit auch bei einer einstufigen Ausführungsform entsprechend der Fig. 1 möglich.

### Liste der verwendeten Bezugszeichen

- 1: Steuereinheit
- 2: Pumpe
- 3,4,5: Leitungen
- 6, 6': Filterreaktor
- 7, 7': Filter bzw. Filtermaterial
- 8, 8': Schaltventil, Schalteinheit
- 9: regelbares Ventil
- 10: Einlass
- 11: Auslass
- 12, 12': Ventil (zur Mengenregulierung)
- 13: Sauerstoffdosiereinheit
- 14: Sauerstoffquelle bzw. -flasche
- 15: Druckminderung
- 16, 17, 18: Druckmesser
- 19: Einheit

## Patentansprüche

1. Vorrichtung zur Behandlung fließfähiger, über ein Drucknetz oder mittels einer Pumpe (2) zugeführter Medien, vorzugsweise zur Wasseraufbereitung, welche mindestens aus einer Steuereinheit (1), Verbindungsleitungen (3, 4, 5) mit darin eingeordneten, zumindest teilweise schaltbaren Ventilen (8, 8', 9, 12, 12') und wenigstens einer von der Steuereinheit (1) zyklisch oder azyklisch vom Filterbetrieb in einen Rückspülbetrieb umgeschalteten Filterstufe (6, 7, 6', 7') besteht, deren Einlass (10, 10') und Auslass (11, 11') für das zu behandelnde Medium in verschiedenen horizontalen Ebenen angeordnet sind und die durch einen im Filterbetrieb von dem zu behandelnden Medium von unten nach oben und im Rückspülbetrieb von einem Spülmedium von oben nach unten durchströmten Filterreaktor (6, 6') mit einem darin eingeordneten Filter (7, 7') aus einem granulatförmigen Filtermaterial gebildet ist, dessen Dichte geringer ist, als die des zu behandelnden Mediums, **dadurch gekennzeichnet, dass** der Filterreaktor (6, 6') geneigt angeordnet ist.

2. Vorrichtung nach Anspruch 1, **dadurch gekennzeichnet, dass** diese mehrere parallel betriebene Filterstufen (6, 7, 6', 7') mit jeweils einem Filterreaktor (6, 6') aufweist, wobei die Filterreaktoren (6, 6') zueinander parallel geneigt angeordnet sind.

3. Vorrichtung nach Anspruch 1 oder 2, **dadurch gekennzeichnet, dass** der oder die Filterreaktoren (6, 6') in einem Winkel von 15° bis 85° gegen die Horizontale geneigt ist bzw. sind.

4. Vorrichtung nach Anspruch 3, **dadurch gekennzeichnet, dass** der Neigungswinkel des Filterreaktors bzw. der Filterreaktoren (6, 6') gegen die Horizontale zwischen 60° und 80° beträgt.

5. Vorrichtung nach Anspruch 3 oder 4 zur Brauchwasseraufbereitung, **dadurch gekennzeichnet, dass** in wenigstens einem Filterreaktor (6, 6') vorgeschäumtes sowie granuliertes Polystyrol als Filtermaterial vorgesehen ist.

6. Vorrichtung nach Anspruch 5, **dadurch gekennzeichnet, dass** das Filtermaterial (7, 7') eine Dichte zwischen 15 und 100 g/l aufweist.

7. Vorrichtung nach Anspruch 4 oder 5, **dadurch gekennzeichnet, dass** das Filtermaterial (7, 7') annähernd kugelförmig ist und eine Flockengröße mit einem Durchmesser zwischen 2 und 8 mm aufweist.

8. Vorrichtung nach Anspruch 1 oder 5, **dadurch gekennzeichnet, dass** an dem Filtermaterial (7, 7') Mikroorganismen angesiedelt sind, welche chemische Verunreinigungen, wie gelöste Eisen- und/oder Manganionen, durch biogene Oxidation in schwerlösliche, am Filter (7, 7') eines Filterreaktors (6, 6') abscheidbare Verbindungen umwandeln.

9. Vorrichtung nach Anspruch 1 oder 8, **dadurch gekennzeichnet, dass** deren Filterstufe (6, 7, 6', 7') oder Filterstufen (6, 7, 6', 7') eine Dosiereinrichtung (13) für einen druck- und mengengeregelten Eintrag von Sauerstoff in das zu behandelnde Medium vorgeordnet ist.

10. Vorrichtung nach Anspruch 9, **dadurch gekennzeichnet, dass** die Sauerstoffdosiereinrichtung (13) und das oder die von der Steuereinheit (1) zur Umschaltung zwischen Filter- und Rückspülbetrieb gesteuerte Schaltventil (8) bzw. gesteuerten Schaltventile (8, 8') eine integrale Einheit (15) bilden.

11. Vorrichtung nach einem der Ansprüche 1 bis 10, **dadurch gekennzeichnet, dass** die Umschaltung der Filterstufe (6, 7, 6', 7') oder Filterstufen (6, 7, 6', 7') zwischen dem Filter- und dem Rückspülbetrieb automatisch durch eine Mikroprozessorsteuerung erfolgt, welche mit einem Display und Speichermitteln zur Hinterlegung und Änderung von Daten zur Festlegung eines Filter-Spül-Regimes verbunden ist.

## Claims

1. Device for treating flowable media which is delivered via a pressure network or by means of a pump (2), preferably for water purification, which consists at least of one control unit (1), connecting lines (3, 4, 5) with valves (8, 8', 9, 12, 12') which are arranged therein and are switchable at least in part, and at least one filter stage (6, 7, 6', 7') which is cyclically or acyclically switched over by the control unit (1) from filter mode to a backwashing mode, whose inlet (10, 10') and outlet (11, 11') for the medium to be treated are arranged in different horizontal planes and which is formed by a filter reactor (6, 6') through which the medium to be treated flows from the bottom to the top in filter mode and through which a rinsing medium flows from the top to the bottom in backwashing mode and which has a filter (7, 7') of a granular filter material arranged therein, the density of which material is lower than that of the medium to be treated, **characterised in that** the filter reactor (6, 6') is arranged in an inclined manner.

2. Device according to Claim 1, **characterised in that** this comprises a plurality of filter stages (6, 7, 6', 7') which are operated in parallel and each of which has a filter reactor (6, 6'), wherein the filter reactors (6, 6') are arranged so as to be inclined parallel to one another.

3. Device according to Claim 1 or 2, **characterised in that** the filter reactor or the filter reactors (6, 6') is or are inclined at an angle of 15° to 85° with respect to the horizontal.

4. Device according to Claim 3, **characterised in that** the angle of inclination of the filter reactor or the filter reactors (6, 6') with respect to the horizontal is between 60° and 80°.

5. Device according to Claim 3 or 4 for industrial water purification, **characterised in that** prefoamed as well as granulated polystyrene is provided as filter material in at least one filter reactor (6, 6').

6. Device according to Claim 5, **characterised in that** the filter material (7, 7') is of a density of between 15 and 100 g/l.

7. Device according to Claim 4 or 5, **characterised in that** the filter material (7, 7') is approximately spherical and has a floc size with a diameter of between 2 and 8 mm.

8. Device according to Claim 1 or 5, **characterised in that** microorganisms are settled on the filter material (7, 7'), which microorganisms convert chemical impurities such as dissolved iron and/or manganese ions through biogenic oxidation into compounds of low solubility which can be deposited on the filter (7, 7') of a filter reactor (6, 6').

9. Device according to Claim 1 or 8, **characterised in that** a metering device (13) for a pressure- and quantity-regulated input of oxygen into the medium to be treated is arranged upstream of the filter stage (6, 7, 6', 7') or filter stages (6, 7, 6', 7') thereof.

10. Device according to Claim 9, **characterised in that** the oxygen metering device (13) and the switching valve (8) or switching valves (8, 8') controlled by the control unit (1) for switching over between filter and backwashing mode form an integral unit (15).

11. Device according to any one of Claims 1 to 10, **characterised in that** the switchover of the filter stage (6, 7, 6', 7') or filter stages (6, 7, 6', 7') between the filter and the backwashing mode takes place automatically through a microprocessor control which is connected to a display and memory means for storing and changing data for establishing a filter-rinsing regime.

## Revendications

1. Dispositif de traitement de fluides aptes à s'écouler apportés par un réseau sous pression ou au moyen d'une pompe (2), de préférence pour le traitement d'eau,
ledit dispositif étant constitué d'au moins une unité de commande (1), de conduits de liaison (3, 4, 5) dans lesquels sont disposées des soupapes (8, 8', 9, 12, 12') dont au moins certaines sont commutables et d'au moins un étage de filtration (6, 7, 6', 7') qui peut être basculé de manière cyclique ou non cyclique par l'unité de commande (1) du mode de filtration à un mode inversé de rinçage, dont l'entrée (10, 10') et la sortie (11, 11') de fluide à traiter sont disposées dans des plans horizontaux différents et qui est formé de réacteurs de filtration (6, 6') dans lesquels sont disposés des filtres (7, 7') en matériau granulaire de filtration dont la densité est inférieure à celle du fluide à traiter,
lesdits réacteurs de filtration étant traversés du bas vers le haut par le fluide à traiter en mode de filtration et étant traversés du haut vers le bas par un fluide de rinçage en mode inversé de rinçage,
**caractérisé en ce que**
les réacteurs de filtration (6, 6') sont disposés en position inclinée.

2. Dispositif selon la revendication 1, **caractérisé en ce qu'**il présente plusieurs étages de filtration (6, 7, 6', 7') qui fonctionnent en parallèle et qui présentent chacun un réacteur de filtration (6, 6'), les réacteurs de filtration (6, 6') étant disposés en position inclinée parallèlement les uns aux autres.

3. Dispositif selon les revendications 1 ou 2, **caractérisé en ce que** le ou les réacteurs de filtration (6, 6') sont inclinés sous un angle de 15° à 85° par rapport à l'horizontale.

4. Dispositif selon la revendication 3, **caractérisé en ce que** l'angle d'inclinaison du réacteur de filtration ou des réacteurs de filtration (6, 6') par rapport à l'horizontale est compris entre 60° et 80°.

5. Dispositif selon les revendications 3 ou 4, pour le traitement d'eaux usées, **caractérisé en ce qu'**un polystyrène pré-moussé et granulé est prévu comme matériau de filtration dans au moins un réacteur de filtration (6, 6').

6. Dispositif selon la revendication 5, **caractérisé en ce que** le matériau de filtration (7, 7') présente une masse spécifique comprise entre 15 et 100 g/l.

7. Dispositif selon les revendications 4 ou 5, **caractérisé en ce que** le matériau de filtration (7, 7') a une forme sensiblement sphérique et **en ce que** les sphères ont un diamètre compris entre 2 et 8 mm.

8. Dispositif selon les revendications 1 ou 5, **caractérisé en ce que** des micro-organismes qui convertissent par oxydation biogène les impuretés chimiques, par exemple des ions dissous de fer et/ou de manganèse, en composés insolubles qui peuvent se déposer sur le filtre (7, 7') d'un réacteur de filtration (6, 6') sont inoculés sur le matériau de filtration (7, 7').

9. Dispositif selon les revendications 1 ou 8, **caractérisé en ce qu'**un dispositif de dosage (13) qui permet d'apporter de l'oxygène d'une manière régulée en fonction de la pression ou du débit dans le fluide à traiter est prévu en amont de son étage de filtration (6, 7, 6', 7') ou de ses étages de filtration (6, 7, 6' 7') .

10. Dispositif selon la revendication 9, **caractérisé en ce que** le dispositif (13) de dosage d'oxygène et la soupape de commutation (8) ou les soupapes de commutation (8, 8') commandées par l'unité de commande (1) pour assurer le basculement entre le mode de filtration et le mode inversé de rinçage forment une unité intégrée (15).

11. Dispositif selon l'une des revendications 1 à 10, **caractérisé en ce que** le basculement de l'étage de filtration (6, 7, 6', 7') ou des étages de filtration (6, 7, 6', 7') entre le mode de filtration et le mode inversé de rinçage s'effectue automatiquement par une commande à microprocesseur qui est reliée à un écran et à des moyens de mémoire qui permettent de conserver et de modifier des données qui définissent un régime de filtration ou un régime de rinçage.
